# EUROPEAN PATENT SPECIFICATION

(11) **EP 4 586 165 B1**
(45) Date of publication and mention of the grant of the patent: **06.05.2026**
(21) Application number: 24150974.4
(22) Date of filing: 09.01.2024
(51) Int. Cl.: G06Q 10/08, G06Q 30/018, G06F 21/86, H04L 9/32, G06K 7/10, G06K 19/077

(54) **DIGITAL TWINS**
DIGITALE ZWILLINGE
JUMEAUX NUMÉRIQUES

(43) Date of publication of application: 16.07.2025
(73) Proprietor: Giesecke+Devrient ePayments GmbH, 81677 München (DE)
(72) Inventor: Latorre, Azalya, 81677 München (DE); Gatiragas, Alex, 81677 München (DE)
(74) Representative: LKGLOBAL Partnerschaftsgesellschaft mbB

(56) References cited:
- US-A1- 2022 391 884
- US-A1- 2023 126 016
- US-A1- 2023 356 091
- SOLOUKI MOHAMMADSADEGH ET AL: "An In-depth Insight at Digital Ownership Through Dynamic NFTs", vol. 214, 11 December 2022 (2022-12-11), AMSTERDAM, NL, pages 875 - 882, XP093176211, ISSN: 1877-0509, Retrieved from the Internet <URL:https://www.sciencedirect.com/science/article/pii/S1877050922019640/pdf?md5=48e2d3723f79338c053b6ff36c8a2489&pid=1-s2.0-S1877050922019640-main.pdf> [retrieved on 20240618], DOI: 10.1016/j.procs.2022.11.254
- DI FRANCESCO MAESA DAMIANO ET AL: "Non Fungible Mutable Tokens: dynamic assets traceability for the Metaverse", 2023 IEEE INTERNATIONAL CONFERENCE ON METAVERSE COMPUTING, NETWORKING AND APPLICATIONS (METACOM), IEEE, 26 June 2023 (2023-06-26), pages 393 - 397, XP034439835, DOI: 10.1109/METACOM57706.2023.00075

## Description

### Technical Field

The present disclosure refers to methods and systems of tracing physical products in the digital world.

### Technical Background

In recent years, blockchains have been discovered to potentially serve various purposes.

For example, DE 20 2021 002 167 U1 describes the creation and representation of written reference by a non-fungible token (NFT).

US 2023/126016 A1 describes a system and method for generating non-fungible tokens for collectibles. The system authenticates physical ownership of a collectible before allowing a requesting entity to generate a non-fungible token for the collectible. The system generates a fiat currency value for the non-fungible token based on the total number of non-fungible tokens already generated for the collectible and the current value of the collectible. The system tracks non-fungible tokens generated for the collectible to ensure that the proportional cost of generating a non-fungible token strictly increases as the total number of non-fungible tokens generated for the collectible increases.

US 2022/391884 A1 describes a method and system for transferring a product having an identifiable chip with unique identifier information relating to a digital asset accessible in a network. The method comprises the steps of: associating a cryptographic token with the unique identifier information of the identifiable chip; storing the cryptographic token via the network in a wallet as the digital asset; transferring the digital asset comprises blocking the cryptographic token until an authentication signal is received associated with the unique identifier in-formation of the identifiable chip.

While a written reference can be easily digitalized as such, this is not possible with a physical product.

### Summary

Based on that, there is a requirement to provide a possibility of tracing a unique physical product in the digital world, which may be seen as an object of the invention. In particular, the required solution shall ensure data authenticity at any time.

To overcome the deficiencies of the prior art, a method of creating a sealed physical product and a corresponding dynamic non-fungible token, as well as a system and corresponding method for tracing such a sealed physical product are provided, according to the features of the independent claims. Further embodiments are evident from the dependent claims and from the present disclosure as a whole.

According to an aspect of the present disclosure, a method of creating a sealed physical product and a corresponding dynamic non-fungible token is provided. The method comprised the following steps:
- Manufacturing the product, wherein the product obtains a unique product identifier that is registered in an information system;
- Sealing the product by a seal, wherein the seal is combined with a first radio tag in a way that the first radio tag is disabled if the seal is broken, and wherein a first unique tag identifier is stored on the first radio tag and registered in the information system;
- Attaching a second radio tag to the product, on which a second unique tag identifier is stored and registered in the information system; and further
- Minting the dNFT on a blockchain using an oracle,

wherein at least the following is written into static metadata of the dNFT from the information system: the unique product identifier, the first unique tag identifier, the second unique tag identifier and a link via the internet to the information system,
wherein the unique product identifier is stored along with information on the product; and
wherein at least the following is written into dynamic metadata of the dNFT: a status parameter corresponding to the lifecycle of the product and an ownership parameter corresponding to ownership of the product,
wherein said dynamic metadata can be updated via the oracle upon submission of a signal from an electronic device, reading either the first and the second unique tag identifier from the first and second radio tag or only the second unique tag identifier from the second radio tag.

Due to the connection of the unique product identifier with the dNFT (which is also unique by definition) via the first and second unique tag identifiers from the physical radio tags, an initial proof of existence of the physical product is achieved in the digital world. This may be regarded as a "digital twin" of the physical product. As the signal provides a gateway to the dNFT via the oracle and since the signal is generated only upon successful reading of at least one of the physical radio tags, the authenticity of the data of the dNFT is assured at any time.

The term "oracle" or "blockchain oracle" as such is known in the art. Particularly, it is one function of an oracle to serve as a source of real-world data. An oracle may connect smart contracts or dNFTs with the outside world (real world), primarily to feed information in from the world, but also the reverse.

In some embodiments of the method, initially upon creating the sealed physical product and the corresponding dNFT, the status parameter is set to "left production facility", the ownership parameter is set to "producer" and a review parameter is set to "disabled". Thus, an initial proof of possession and the current stage in the product lifecycle can be achieved.

In some embodiments of the method, further at least one review parameter is written into dynamic metadata of the dNFT. This can be useful to leave a review of the product after use (e.g. consumption).

Another aspect of the present disclosure refers to a system for tracing a sealed physical product, comprising:
- an information system;
- an oracle;
- a blockchain,
- an electronic device,
- the sealed physical product; and
- a dynamic non-fungible token (dNFT), corresponding to the sealed physical product, stored on the blockchain;

wherein the sealed physical product and the dNFT are obtained by a method described above; and
wherein the oracle, the blockchain and the electronic device are designed and configured to be used in the method described above.

Another aspect of the present disclosure refers to a method of tracing a sealed physical product by operating a system according to the present disclosure. The method comprising the following steps:
- Using the electronic device to perform a first reading action on the first radio tag and afterwards performing a second reading action on the second radio tag;
- Sending a signal from the electronic device to the oracle that comprises a result of the first and second reading actions; and then
- Performing one of the following actions by the oracle:
   a) If the signal comprises a positive reading of the first unique tag identifier of the first radio tag and the second unique tag identifier of the second radio tag, setting the status parameter to "sold" and setting the ownership parameter to a unique device identifier of the electronic device; or
   b) If the signal comprises a positive reading of only the second unique tag identifier, setting the status parameter to "opened" and leaving the ownership parameter unchanged.

The availability of the radio tags implies the state of the product, whether it has been opened or not. Thus, the property rights of the originally sealed product can be safely transferred. The fact that an acquirer needs to have physical access to the radio tags, significantly enhances safety. In case the seal has been broken, access to both radio tags is denied. This assures that it is clear who unsealed the product, that the respective person is still the owner may leave a review, for example.

In an embodiment of the method, action a) is performed and afterwards, the first and second reading actions are repeated with a different electronic device, before the seal of the product is broken. Thus, the property rights of the product can be easily transferred to a user of a different electronic device.

In an embodiment of the method, action b) is performed after the seal of the product is broken and wherein a review parameter is set to "enabled". Thus, a review may be entered into the dNFT.

In an embodiment of the method, the electronic device comprises an app with a personalized app identifier serving as the unique device identifier of the electronic device. This allows for easy identification of the owner of the product because an app can be easily personalized.

In an embodiment of the method, the app provides at least the following functionalities: prompting a user of the electronic device to perform the first reading action and afterwards the second reading action; prompting the user to confirm the result of actions a) or b) prior to transmission of the signal to the oracle; prompting the user to enter a review of the product in case of action b) that is included in the signal. All these functions enhance the comfort of executing the method, provide safety mechanisms or support the completion of relevant product information.

In an embodiment of the method, in case of action b), the oracle further writes the review into the dynamic metadata of the dNFT and/or communicates to the information system to update the information on the product stored therein. Thus, it is assured that important product information is kept up to date and secured against false modification.

Summarized again in other words, the idea of the underlying invention is to distribute two NFC tags in a screw top or cork seal of a bottle and a bottle label each, serving as a source to access a proof of authenticity, possession, and consumption. The NFC tags act as physical gateways to access digital information stored in programmable/dynamic NFTs wherein a seller or owner of the bottle will find proof of authenticity (related to the supply chain), but also of possession once a consumer has acquired the bottle. When the NFC tag in the screw top or cork seal breaks and the customer reads the label with a phone, the dNFT displays a changed status to showcase that the owner has consumed that bottle and it becomes a digital memento.

### Brief description of the drawings

The present invention will hereinafter be described in conjunction with the following drawing figures, wherein like numerals denote like elements, and wherein:
- Fig. 1: shows a pattern of a method of creating a sealed physical product and a corresponding dynamic non-fungible token (dNFT);
- Fig. 2: shows a system for tracing a sealed physical product operated to execute a method of tracing a sealed physical product; and
- Fig. 3: shows how a seal of a sealed physical product is broken.

### Detailed description of exemplary embodiments

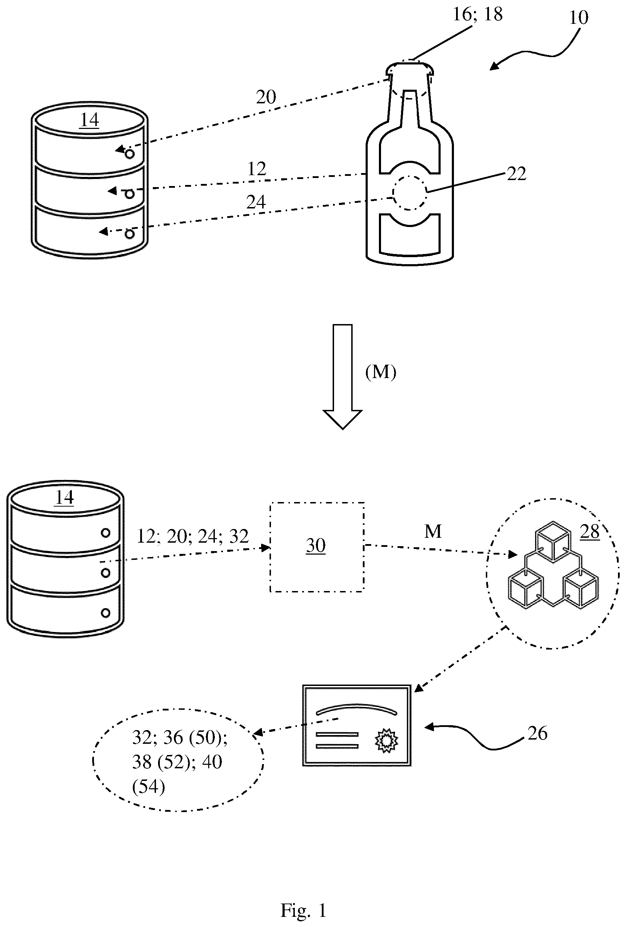

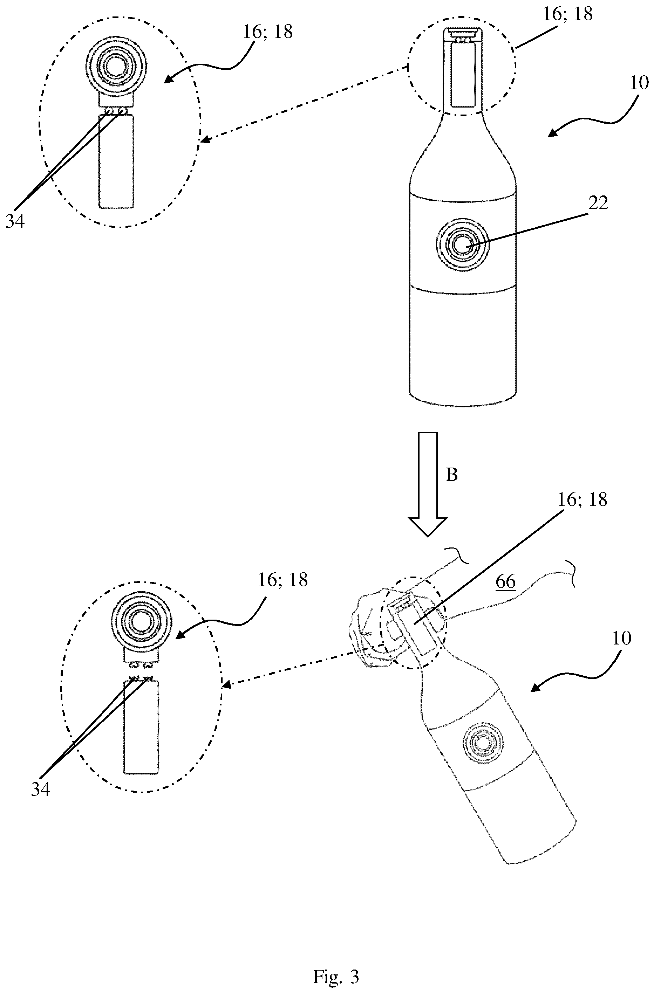

Fig. 1 shows the principle of a method of creating a sealed physical product 10 and a corresponding dynamic non-fungible token (dNFT) 26. The sealed physical product 10 may be any product that can be sealed and needs to be unsealed (breaking the seal) for use. Such products may be found in the field of consumables, for example such as medicine or liquids. In this example, the product 10 may be a bottle of wine (also compare Fig. 3).

The method comprises a step, wherein the product 10 is manufactured and obtains a unique product identifier 12, such as a serial number. The unique product identifier 12 is registered (stored) in an information system 14. The information system 14 may, for example, comprise an ERP system at a producer's site. Generally, the information system 14 may be any suitable system for the purposes described herein. It may be centralized or distributed and may comprise different databases, of which some may be accessible via the Internet.

The method further comprises a step of sealing the product 10 by a seal 16, wherein the seal 16 is combined with a first radio tag 18 in a way that the first radio tag 18 is disabled if the seal 16 is broken (indicated by B in Fig. 3). A first unique tag identifier 20 is stored on the first radio tag 18 and registered in the information system 14. Further, a second radio tag 22 is attached to the product 10, on which a second unique tag identifier 24 is stored and registered in the information system 14. The radio tags may be passive radio tags, preferably. In particular, it is preferred to use NFCs for this purpose. NFCs normally comprise a unique identifier (UID), for example in the form of a unique 7-byte-code.

Fig. 3 exemplarily shows how the first radio tag 18 is combined with the seal 16 of the product 10 (wine bottle), while the second radio tag 22 may, for example, be arranged behind a label of the bottle. To break the seal (16) (indicated by B), a user 66 may simply open the bottle, thus disengaging electrical contacts 34 of the first radio tag 18 to disable it.

Turning back to Fig. 1, the method further comprises a step of minting (indicated by M) the dNFT 26 on a blockchain 28 via an oracle 30, which provides a gateway to the blockchain 28 as known in the art.

An NFT basically comprises a unique token ID, an address on a blockchain (publicly or privately run, centralized or decentralized) and metadata. The dNFT 26 comprises static and dynamic metadata, hence the expression "dynamic NFT". The dynamic metadata may at least in parts be changed depending on external conditions.

In the method, at least the following is written into static metadata of the dNFT 26 from the information system 14: the unique product identifier 12, the first unique tag identifier 20, the second unique tag identifier 24 and a link 32 via the internet to the information system 14, wherein the unique product identifier 12 is stored along with information on the product 10.

The information on the product 10, may be hosted by the producer of the product 10 and thus may at least comprise a connection of the unique product identifier 12 and the producer or party hosting the information. There may be further pieces of information stored, such as a place and/or a time of manufacturing of the physical product 12, a name of the product 12 an identifier of a manufacturer/producer and/or retailer of the product 12 or a link to a respective website.

Further, at least a status parameter 36 corresponding to the lifecycle of the product 10 and an ownership parameter 38 corresponding to ownership of the product 10 are written into dynamic metadata of the dNFT 26. The status parameter 36 may indicated stages of the lifecycle, such as produced, sold, re-sold or opened/consumed. The information on the product 10 provided by the information system 14 may correspond to the status parameter 36 and/or ownership parameter 38. For example, the information may comprise a picture of the product 12, representing a current state of the lifecycle. The ownership parameter 38 may be any suitable indication of ownership, such as a respective identifier. 2. Preferably, at least one review parameter 40 is also written into dynamic metadata of the dNFT 26, the relevance of which will be described further down.

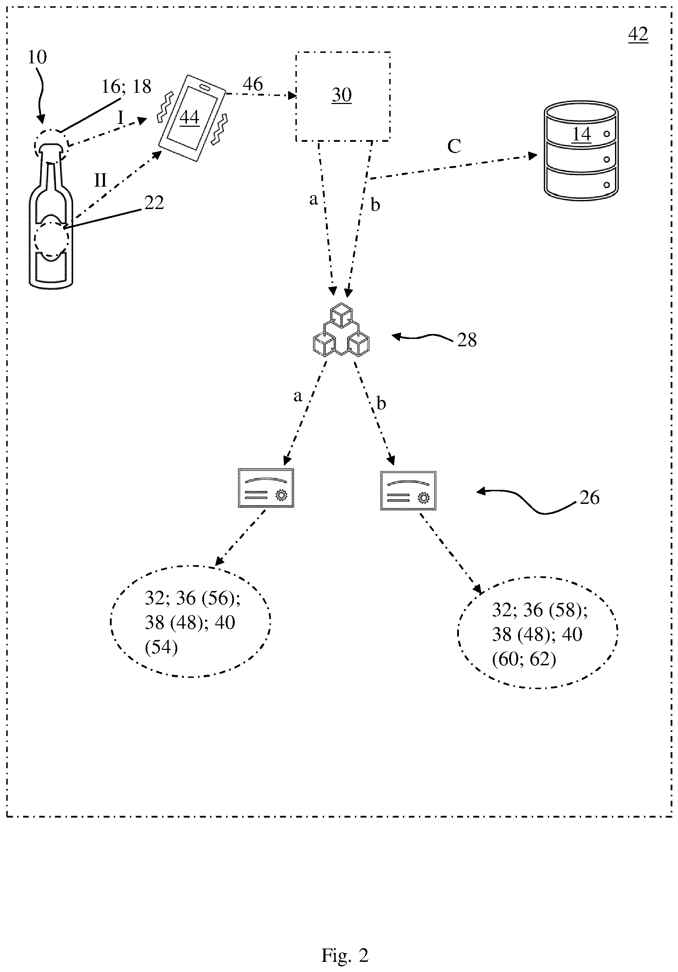

The dynamic metadata can be updated via the oracle 30 upon submission of a signal 46 from an electronic device 44 (compare Fig. 2), reading either the first and the second unique tag identifier 20, 24 from the first and second radio tag 18, 22 or only the second unique tag identifier 24 from the second radio tag 22. This will be explained in more detail further down.

Preferably, initially upon creating the sealed physical product 10 and the corresponding dNFT 26, the status parameter 36 is set to "left production facility (50)". Based on that, an initial proof of existence of the product 12 is provided. The ownership parameter 38 is preferably set to "producer (52)", based on which an initial proof of possession (producer) of the product 12 is provided. Preferably, a review parameter 40 is set to "disabled (54)" before the product 12 is sold the first time to disable any product review notes (further described later).

Turning now to Fig. 2, a system 42 for tracing a sealed physical product 10 is shown. The system 42 comprises the information system 14, the oracle 30, the blockchain 28, the electronic device 44, the sealed physical product 10 and the dNFT 26 described above. The system 42 can be operated to trace the sealed physical product 10 as follows:
The electronic device 44 can be used to perform a first reading action I on the first radio tag 18 and afterwards performing a second reading action II on the second radio tag 22. Based on these reading actions I, II, a signal 46 is sent from the electronic device 44 to the oracle 30, said signal 46 comprising a result of the first and second reading actions I, II. Based on that, the oracle 30 selectively performs one of the following actions a) or b):
If the signal 46 comprises positive reading of a first unique tag identifier 20 of the first radio tag 18 and a second unique tag identifier 24 of the second radio tag 20, action a) is performed, according to which the status parameter 36 is set to "sold (56)" and the ownership parameter 38 is set to a unique device identifier 48 of the electronic device 44.

If the signal 46 comprises positive reading of only the second unique tag identifier 24, action b) is performed, according to which the status parameter 36 is set to "opened (58)" and the ownership parameter 38 remains unchanged.

In an example, action a) may be performed and afterwards, the first and second reading action I, II are repeated with a different electronic device, before a seal 16 of the product 10 is broken (B). Thus, ownership can be transferred before the product 12 is opened.

In a further example, action b) is performed after the seal 16 of the product 10 is broken (B) and wherein a review parameter 40 is set to "enabled (60)". Thus, a user 66 (owner of the electronic device 44 or other electronic device, who is the owner of the product 10) can be allowed to enter a review 62 of the product 12 in the dNFT 26 via the oracle 30.

Preferably, the electronic device 44 comprises an app with a personalized app identifier serving as the unique device identifier 48 of the electronic device 44. Thus, possession of the product 10 is shown indirectly via possession of the electronic device 44 on which the app is running. Preferably, the app is prompting the user 66 of the electronic device 44 to perform the first reading action I and afterwards the second reading action II. Thus, the correct order of these actions is assured. Preferably, the app is prompting the user 66 to confirm the result of actions a) or b) prior to transmission of the signal 46 to the oracle 30 to avoid false transmissions. Preferably, the app is prompting the user 66 to enter the review 62 of the product 10 in case of action b) that is included in the signal 46.

Preferably, in case of action b), the oracle 30 further writes the review 62 into dynamic metadata of the dNFT 26 and/or communicates (indicated by C in Fig. 2) to the information system 14 to update the information on the product 10 stored therein. This update may for example exchange a picture of a full bottle of wine by a picture of an empty bottle of wine.

### Reference numerals

- 10: product
- 12: unique product identifier
- 14: information system
- 16: seal
- 18: first radio tag
- 20: first unique tag identifier
- 22: second radio tag
- 24: second unique tag identifier
- 26: dynamic non-fungible token (dNFT)
- 28: blockchain
- 30: oracle
- 32: link
- 34: electrical contact
- 36: status parameter
- 38: ownership parameter
- 40: review parameter
- 42: system
- 44: electronic device
- 46: signal
- 48: unique device identifier
- 50: "left production facility"
- 52: "producer"
- 54: "disabled"
- 56: "sold"
- 58: "opened"
- 60: "enabled"
- 62: review
- 66: user
- I: first reading action
- II: second reading action
- a): action
- b): action
- B: breaking the seal
- C: communication
- M: minting

## Claims

1. Method of creating a sealed physical product (10) and a corresponding dynamic non-fungible token (dNFT) (26), comprising the following steps:
- Manufacturing the product (10), wherein the product (10) obtains a unique product identifier (12) that is registered in an information system (14);
- Sealing the product (10) by a seal (16), wherein the seal (16) is combined with a first radio tag (18) in a way that the first radio tag (18) is disabled if the seal (16) is broken (B), and wherein a first unique tag identifier (20) is stored on the first radio tag (18) and registered in the information system (14);
- Attaching a second radio tag (22) to the product (10), on which a second unique tag identifier (24) is stored and registered in the information system (14); and further
- Minting (M) the dNFT (26) on a blockchain (28) using an oracle (30),
wherein at least the following is written into static metadata of the dNFT (26) from the information system (14): the unique product identifier (12), the first unique tag identifier (20), the second unique tag identifier (24) and a link (32) via the internet to the information system (14), wherein the unique product identifier (12) is stored along with information on the product (10); and
wherein at least the following is written into dynamic metadata of the dNFT (26): a status parameter (36) corresponding to the lifecycle of the product (10) and an ownership parameter (38) corresponding to ownership of the product (10),
wherein said dynamic metadata can be updated via the oracle (30) upon submission of a signal (46) from an electronic device (44), reading either the first and the second unique tag identifier (20; 24) from the first and second radio tag (18; 22) or only the second unique tag identifier (24) from the second radio tag (22).

2. Method according to claim 1, wherein further at least one review parameter (40) is written into dynamic metadata of the dNFT (26).

3. Method according to any of the preceding claims, wherein initially upon creating the sealed physical product (10) and the corresponding dNFT (26), the status parameter (36) is set to "left production facility (50)", the ownership parameter (38) is set to "producer (52)" and a review parameter (40) is set to "disabled (54)".

4. System (42) for tracing a sealed physical product (10), comprising:
- an information system (14);
- an oracle (30);
- a blockchain (28),
- an electronic device (44),
- the sealed physical product (10); and
- a dynamic non-fungible token (dNFT) (26) corresponding to the sealed physical product (10) stored on the blockchain (28);
wherein the sealed physical product (10) and the dNFT (26) are obtained by a method according to any of the preceding claims; and
wherein the oracle (30), the blockchain (28) and the electronic device (44) are designed and configured to be used in a method according to any of the preceding claims.

5. Method of tracing a sealed physical product (10) by operating a system (42) according to claim 4, comprising the following steps:
- Using the electronic device (44) to perform a first reading action (I) on the first radio tag (18) and afterwards performing a second reading action (II) on the second radio tag (22);
- Sending a signal (46) from the electronic device (44) to the oracle (30) that comprises a result of the first and second reading actions (I; II); and then
- Performing one of the following actions (a; b) by the oracle (30):
a) If the signal (46) comprises a positive reading of the first unique tag identifier (20) of the first radio tag (18) and the second unique tag identifier (24) of the second radio tag (20), setting the status parameter (36) to "sold (56)" and setting the ownership parameter (38) to a unique device identifier (48) of the electronic device (44); or
b) If the signal (46) comprises a positive reading of only the second unique tag identifier (24), setting the status parameter (36) to "opened (58)" and leaving the ownership parameter (38) unchanged.

6. Method according to claim 5, wherein action a) is performed and afterwards, the first and second reading actions (I; II) are repeated with a different electronic device, before the seal (16) of the product (10) is broken (B).

7. Method according to any of the claims 5 to 6, wherein action b) is performed after the seal (16) of the product (10) is broken (B) and wherein a review parameter (40) is set to "enabled (60)".

8. Method according to any of the claims 5 to 7, wherein the electronic device (44) comprises an app with a personalized app identifier serving as the unique device identifier (48) of the electronic device (44).

9. Method according to claim 8, wherein the app provides at least the following functionalities: prompting a user (66) of the electronic device (44) to perform the first reading action (I) and afterwards the second reading action (II); prompting the user (66) to confirm the result of actions a) or b) prior to transmission of the signal (46) to the oracle (30); prompting the user (66) to enter a review (62) of the product (10) in case of action b) that is included in the signal (46).

10. Method according to claim 9, wherein in case of action b), the oracle (30) further writes the review (62) into the dynamic metadata of the dNFT (26) and/or communicates (C) to the information system (14) to update the information on the product (10) stored therein.

## Patentansprüche

1. Verfahren zum Erstellen eines versiegelten physischen Produkts (10) und eines entsprechenden dynamischen Non-Fungible Tokens (dNFT) (26), umfassend die folgenden Schritte:
- Herstellen des Produkts (10), wobei das Produkt (10) eine eindeutige Produktkennung (12) erhält, die in einem Informationssystem (14) registriert ist;
- Versiegeln des Produkts (10) durch ein Siegel (16), wobei das Siegel (16) mit einem ersten Funketikett (18) derart kombiniert ist, dass das erste Funketikett (18) deaktiviert wird, wenn das Siegel (16) gebrochen wird (B), und wobei eine erste eindeutige Etikett-Kennung (20) auf dem ersten Funketikett (18) gespeichert und im Informationssystem (14) registriert wird;
- Anbringen eines zweiten Funketiketts (22) an dem Produkt (10), auf dem eine zweite eindeutige Etikett-Kennung (24) gespeichert und im Informationssystem (14) registriert ist; und ferner
- Prägen (M) des dNFT (26) auf einer Blockchain (28) unter Verwendung eines Orakels (30),
wobei mindestens Folgendes aus dem Informationssystem (14) in statische Metadaten des dNFT (26) geschrieben wird: die eindeutige Produktkennung (12), die erste eindeutige Etikett-Kennung (20), die zweite eindeutige Etikett-Kennung (24) und eine Verbindung (32) über das Internet zum Informationssystem (14), wobei die eindeutige Produktkennung (12) zusammen mit Informationen über das Produkt (10) gespeichert wird; und
wobei mindestens Folgendes in die dynamischen Metadaten des dNFT (26) geschrieben wird: ein Statusparameter (36), der dem Lebenszyklus des Produkts (10) entspricht, und ein Inhaberschaftsparameter (38), der einer Inhaberschaft an dem Produkt (10) entspricht,
wobei die dynamischen Metadaten über das Orakel (30) bei Übermittlung eines Signals (46) von einer elektronischen Vorrichtung (44) aktualisiert werden können, wobei entweder die erste und die zweite eindeutige Etikett-Kennung (20; 24) vom ersten und zweiten Funketikett (18; 22) oder nur die zweite eindeutige Etikett-Kennung (24) vom zweiten Funketikett (22) gelesen wird.

2. Verfahren nach Anspruch 1, wobei ferner mindestens ein Bewertungsparameter (40) in die dynamischen Metadaten des dNFT (26) geschrieben wird.

3. Verfahren nach einem der vorhergehenden Ansprüche, wobei zu Beginn bei der Erstellung des versiegelten physischen Produkts (10) und des entsprechenden dNFT (26) der Statusparameter (36) auf "hat die Produktionsstätte (50) verlassen" gesetzt wird, der Inhaberschaftsparameter (38) auf "Hersteller (52)" gesetzt wird und ein Bewertungsparameter (40) auf "deaktiviert (54)" gesetzt wird.

4. System (42) zur Rückverfolgung eines versiegelten physischen Produkts (10), umfassend:
- ein Informationssystem (14);
- ein Orakel (30);
- eine Blockchain (28),
- eine elektronische Vorrichtung (44),
- das versiegelte physische Produkt (10); und
- ein dynamisches Non-Fungible Token (dNFT) (26), das dem versiegelten physischen Produkt (10) entspricht und in der Blockchain (28) gespeichert ist; wobei das versiegelte physische Produkt (10) und das dNFT (26) durch ein Verfahren gemäß einem der vorhergehenden Ansprüche erhalten werden; und wobei das Orakel (30), die Blockchain (28) und die elektronische Vorrichtung (44)
so ausgelegt und konfiguriert sind, dass sie in einem Verfahren gemäß einem der vorhergehenden Ansprüche verwendet werden können.

5. Verfahren zum Verfolgen eines versiegelten physischen Produkts (10) durch Betreiben eines Systems (42) gemäß Anspruch 4, das die folgenden Schritte umfasst:
- Verwenden der elektronischen Vorrichtung (44), um einen ersten Lesevorgang (I) an dem ersten Funketikett (18) durchzuführen und anschließend einen zweiten Lesevorgang (II) an dem zweiten Funketikett (22) durchzuführen;
- Senden eines Signals (46) von der elektronischen Vorrichtung (44) an das Orakel (30), das ein Ergebnis des ersten und zweiten Lesevorgangs (I; II) umfasst; und anschließend
- Durchführen eines der folgenden Vorgänge (a; b) durch das Orakel (30):
a) Wenn das Signal (46) einen positiven Messwert der ersten eindeutigen Etikett-Kennung (20) des ersten Funketiketts (18) und der zweiten eindeutigen Etikett-Kennung (24) des zweiten Funketiketts (20) umfasst, Setzen des Statusparameters (36) auf "verkauft (56)" und Setzen des Inhaberschaftsparameters (38) auf eine eindeutige Vorrichtungskennung (48) der elektronischen Vorrichtung (44); oder
b) Wenn das Signal (46) einen positiven Messwert nur der zweiten eindeutigen Etikett-Kennung (24) umfasst, Setzen des Statusparameters (36) auf "geöffnet (58)" und Unverändertbelassen des Inhaberschaftsparameters (38).

6. Verfahren nach Anspruch 5, wobei der Vorgang a) durchgeführt wird und anschließend der erste und zweite Lesevorgang (I; II) mit einer anderen elektronischen Vorrichtung wiederholt werden, bevor die Versiegelung (16) des Produkts (10) gebrochen wird (B).

7. Verfahren nach einem der Ansprüche 5 bis 6, wobei der Schritt b) durchgeführt wird, nachdem die Versiegelung (16) des Produkts (10) gebrochen wurde (B), und wobei ein Bewertungsparameter (40) auf "aktiviert (60)" gesetzt wird.

8. Verfahren nach einem der Ansprüche 5 bis 7, wobei die elektronische Vorrichtung (44) eine Anwendung (App) mit einer personalisierten Anwendungskennung umfasst, die als eindeutige Vorrichtungskennung (48) der elektronischen Vorrichtung (44) dient.

9. Verfahren nach Anspruch 8, wobei die Anwendung mindestens die folgenden Funktionen bereitstellt: Auffordern eines Benutzers (66) der elektronischen Vorrichtung (44), den ersten Lesevorgang (I) und anschließend den zweiten Lesevorgang (II) durchzuführen; Auffordern des Benutzers (66), das Ergebnis der Vorgänge a) oder b) vor der Übertragung des Signals (46) an das Orakel (30) zu bestätigen; Auffordern des Benutzers (66), im Falle des Vorgangs b), der im Signal (46) enthalten ist, eine Bewertung (62) des Produkts (10) einzugeben.

10. Verfahren nach Anspruch 9, wobei im Fall des Vorgangs b) das Orakel (30) ferner die Bewertung (62) in die dynamischen Metadaten des dNFT (26) schreibt und/oder dem Informationssystem (14) mitteilt (C), die darin gespeicherten Informationen über das Produkt (10) zu aktualisieren.

## Revendications

1. Procédé de création d'un produit physique scellé (10) et d'un jeton non fongible dynamique (dNFT) (26) correspondant, comprenant les étapes suivantes :
- la fabrication du produit (10), dans lequel le produit (10) obtient un identifiant de produit unique (12) qui est enregistré dans un système d'information (14) ;
- le scellage du produit (10) par un sceau (16), dans lequel le sceau (16) est combiné à une première étiquette radio (18) de telle manière que la première étiquette radio (18) soit désactivée si le sceau (16) est rompu (B), et dans lequel un premier identifiant d'étiquette unique (20) est stocké sur la première étiquette radio (18) et enregistré dans le système d'information (14) ;
- la fixation d'une deuxième étiquette radio (22) au produit (10), sur laquelle un deuxième identifiant d'étiquette unique (24) est stocké et enregistré dans le système d'information (14) ; et en outre
- la frappe (M) du dNFT (26) sur une blockchain (28) à l'aide d'un oracle (30), dans lequel au moins ce qui suit est écrit dans des métadonnées statiques du dNFT (26) à partir du système d'information (14) :
l'identifiant de produit unique (12), le premier identifiant d'étiquette unique (20), le deuxième identifiant d'étiquette unique (24) et un lien (32) via l'Internet au système d'information (14), dans lequel l'identifiant de produit unique (12) est stocké avec des informations sur le produit (10) ;
et dans lequel au moins ce qui suit est écrit dans des métadonnées dynamiques du dNFT (26) : un paramètre d'état (36) correspondant au cycle de vie du produit (10) et un paramètre de propriété (38) correspondant à la propriété du produit (10),
dans lequel lesdites métadonnées dynamiques peuvent être mises à jour via l'oracle (30) à la soumission d'un signal (46) depuis un dispositif électronique (44), en lisant soit les premier et deuxième identifiants d'étiquette uniques (20 ; 24) depuis les première et deuxième étiquettes radio (18 ; 22) soit seulement le deuxième identifiant d'étiquette unique (24) depuis la deuxième étiquette radio (22).

2. Procédé selon la revendication 1, dans lequel en outre au moins un paramètre de revue (40) est écrit dans des métadonnées dynamiques du dNFT (26).

3. Procédé selon l'une quelconque des revendications précédentes, dans lequel, initialement à la création du produit physique scellé (10) et du dNFT (26) correspondant, le paramètre d'état (36) est défini à « a quitté l'établissement de production (50) », le paramètre de propriété (38) est défini à « producteur (52) » et un paramètre de revue (40) est défini à « désactivé (54) ».

4. Système (42) de traçage d'un produit physique scellé (10), comprenant :
- un système d'information (14) ;
- un oracle (30) ;
- une blockchain (28),
- un dispositif électronique (44),
- le produit physique scellé (10) ; et
- un jeton non fongible dynamique (dNFT) (26) correspondant au produit physique scellé (10) stocké sur la blockchain (28) ;
dans lequel le produit physique scellé (10) et le dNFT (26) sont obtenus par un procédé selon l'une quelconque des revendications précédentes ; et
dans lequel l'oracle (30), la blockchain (28) et le dispositif électronique (44) sont conçus et configurés pour être utilisés dans un procédé selon l'une quelconque des revendications précédentes.

5. Procédé de traçage d'un produit physique scellé (10) par l'exploitation d'un système (42) selon la revendication 4, comprenant les étapes suivantes :
- l'utilisation du dispositif électronique (44) pour réaliser une première action de lecture (I) sur la première étiquette radio (18) puis pour réaliser une deuxième action de lecture (II) sur la deuxième étiquette radio (22) ;
- l'envoi d'un signal (46) depuis le dispositif électronique (44) à l'oracle (30), qui comprend un résultat des première et deuxième actions de lecture (I ; II) ; puis
- la réalisation de l'une des actions (a ; b) suivantes par l'oracle (30) :
a) si le signal (46) comprend une lecture positive du premier identifiant d'étiquette unique (20) de la première étiquette radio (18) et du deuxième identifiant d'étiquette unique (24) de la deuxième étiquette radio (20), la définition du paramètre d'état (36) à « vendu (56) » et la définition du paramètre de propriété (38) à un identifiant de dispositif unique (48) du dispositif électronique (44) ; ou
b) si le signal (46) comprend une lecture positive seulement du deuxième identifiant d'étiquette unique (24), la définition du paramètre d'état (36) à « ouvert (58) » et le maintien du paramètre de propriété (38) inchangé.

6. Procédé selon la revendication 5, dans lequel l'action a) est réalisée, puis les première et deuxième actions de lecture (I ; II) sont répétées avec un dispositif électronique différent, avant la rupture (B) du sceau (16) du produit (10).

7. Procédé selon l'une quelconque des revendications 5 et 6, dans lequel l'action b) est réalisée après la rupture (B) du sceau (16) du produit (10) et dans lequel un paramètre de revue (40) est défini à « activé (60) ».

8. Procédé selon l'une quelconque des revendications 5 à 7, dans lequel le dispositif électronique (44) comprend une appli avec un identifiant d'appli personnalisé servant d'identifiant de dispositif unique (48) du dispositif électronique (44).

9. Procédé selon la revendication 8, dans lequel l'appli fournit au moins l'une des fonctionnalités suivantes : la demande à un utilisateur (66) du dispositif électronique (44) de réaliser la première action de lecture (I) puis la deuxième action de lecture (II) ; la demande à l'utilisateur (66) de confirmer le résultat de l'action a) ou b) avant la transmission du signal (46) à l'oracle (30) ; la demande à l'utilisateur (66) de saisir une revue (62) du produit (10) dans le cas de l'action b) qui est incluse dans le signal (46).

10. Procédé selon la revendication 9, dans lequel, dans le cas de l'action b), l'oracle (30) écrit en outre la revue (62) dans les métadonnées dynamiques du dNFT (26) et/ou la communique (C) au système d'information (14) pour mettre à jour les informations sur le produit (10) stockées dans celui-ci.
